# EUROPÄISCHE PATENTANMELDUNG

(11) **EP 3 786 474 A1**
(43) Veröffentlichungstag der Anmeldung: **03.03.2021**
(21) Anmeldenummer: 19193854.7
(22) Anmeldetag: 27.08.2019
(51) Int. Cl.: F16D 41/12, F16D 41/18

(54) **FORMSCHLÜSSIGE FREILAUFKUPPLUNG**

(71) Anmelder: Hilti Aktiengesellschaft, 9494 Schaan (LI)
(72) Erfinder: Knyrim, Maximilian, 89584 Ehingen (DE)
(74) Vertreter: Hilti Aktiengesellschaft Corporate Intellectual Property

(57) **Zusammenfassung**

Formschlüssige Freilaufkupplung mit einem eine Rastkontur aufweisenden Außenring und einem konzentrisch zum Außenring angeordneten Innenring, wobei der Innenring eine Klinke aufweist, die zum Eingriff in die Rastkontur vorgesehen ist, wobei die Klinke beweglich mit dem Innenring verbunden und vorzugsweise einstückig mit dem Innenring ausgebildet ist.

## Beschreibung

Die vorliegende Erfindung betrifft eine formschlüssige Freilaufkupplung mit einem eine Rastkontur aufweisenden Außenring und einem konzentrisch zum Außenring angeordneten Innenring. Der Innenring weist wenigstens eine Klinke auf, die zum Eingriff in die Rastkontur vorgesehen ist.

Eine solche Freilaufkupplung ist beispielweise aus der DE10 2008 064 153 A1 bekannt.

Es ist Aufgabe der vorliegenden Erfindung eine Freilaufkupplung bereitzustellen, die eine vergleichsweise einfache Montage begünstigt.

Die Aufgabe wird dadurch gelöst, dass die Klinke beweglich mit dem Innenring verbunden und vorzugsweise einstückig mit dem Innenring ausgebildet ist. Die Erfindung schließt die Erkenntnis ein, dass formschlüssige Freilaufkupplungen - etwa im Gegensatz zu kraftschlüssigen Freilaufkupplungen - mit einer vergleichsweise geringen Teilezahl darstellbar sind, was eine einfache und kostengünstige Montage begünstigt. Auf Grund des vermeidbaren "Durchrutschens" formschlüssiger Freilaufkupplungen eignen sich diese in besonderer Weise zum Übertragen vergleichsweise hoher Drehmomente, die beispielsweise in Bohrhämmern auftreten. Ist die Klinke, wie in einer besonders bevorzugten Ausgestaltung vorgesehen, einstückig (monolithisch) mit dem Innenring ausgebildet, ergibt sich ein weiterer Vorteil hinsichtlich einer einfachen und kostengünstigen Montage.

In einer besonders bevorzugten Ausgestaltung weist der Innenring eine Nebenklinke auf, die, bezogen auf eine Rotationsachse der Freilaufkupplung, in axialer Richtung zu der Klinke versetzt am Innenring angeordnet. Es hat sich als vorteilhaft herausgestellt, wenn die Nebenklinke einstückig mit Innenring ausgebildet ist. In einer weiteren bevorzugten Ausgestaltung sind die Klinke und die Nebenklinke durch einen umlaufenden Axialspalt voneinander beabstandet. Die Klinke und die Nebenklinke können in axialer Richtung fluchten.

Es hat sich als besonders vorteilhaft herausgestellt, wenn die Klinke und/oder die Nebenklinke jeweils als Drucksperrklinke ausgebildet ist.

In einer weiteren bevorzugten Ausgestaltung weist der der Innenring eine Mehrzahl von Klinken aufweist, die entlang eines äußeren Umfangs des Innenrings angeordnet sind. Der Innenring eine Mehrzahl von Nebenklinken aufweisen, die entlang eines äußeren Umfangs des Innenrings angeordnet sind. Besonders bevorzugt ist es, wenn die Klinke und die Nebenklinke in axialer Richtung fluchten.

Es hat sich als vorteilhaft herausgestellt, wenn der Außenring und/oder der Innenring als Spritzgussteil bereitgestellt ist. Der Außenring und/oder der Innenring können aus Kunststoff besteht oder einen solchen aufweisen. Besonders bevorzugt ist der Außenring und/oder der Innenring metallfrei ausgebildet. Eine Klinke und/oder eine Nebenklinke kann mehrere Eingriffsflanken zum Eingriff in eine Rastkontur aufweisen.

In einer weiteren bevorzugten Ausgestaltung weist der der Innenring ein Verstärkungsprofil zur Erhöhung eines übertragbaren Drehmoments aufweist. Vorzugsweise ist das Verstärkungsprofil, wenn die Freilaufkupplung in Sperrrichtung betätigt wird, gegen ein an der Klinke ausgebildetes Gegenprofil abgestützt ist. Die Sperrrichtung ist vorzugsweise auf eine Betätigung am Außenring bezogen. Es hat sich als vorteilhaft herausgestellt, wenn das Verstärkungsprofil und/oder das Gegenprofil auf einer der Rastkontur abgewandten Seite der Klinke angeordnet ist. Das Verstärkungsprofil und/oder das Gegenprofil können einstückig mit dem Innenring ausgebildet sein.

In einer besonders bevorzugten Ausgestaltung weist die Freilaufkupplung einen konzentrisch zum Innenring angeordneten Nebenaußenring auf. Vorzugsweise ist der Nebenaußenring als vom Außenring verschiedenes Teil ausgebildet. Somit kann vorteilhafterweise mittels des Nebenaußenring eine vom Außenring unabhängige Freilauffunktion realisiert werden. Der Außenring und der Nebenaußenring können auf ein und demselben Innenring angeordnet sein. Die Ausgestaltung der Freilaufkupplung mit einen konzentrisch zum Innenring angeordneten Nebenaußenring kann sowohl für eine einstückig mit dem Innenring ausgebildete Klinke und/oder Nebenklinke als auch für eine nicht einstückig mit dem Innenring ausgebildete Klinke und/ oder Nebenklinke zum Tragen kommen.

Es hat sich als vorteilhaft herausgestellt, wenn der Außenring eine Schwenkhülse zum Koppeln des Außenrings an ein Schlagwerk und/oder einen Drehantrieb eines Bohrhammers aufweist.

Es wird ebenfalls ein Bohrhammer bereitgestellt, der eine Freilaufkupplung der vorbeschriebenen Art aufweist. Vorzugsweise ist die Werkzeugaufnahme des Bohrhammers mit dem Schlagwerk und/oder dem Drehantrieb zwecks Bewegungsübertragung gekoppelt. Die Werkzeugaufnahme kann zur Aufnahme eines schlagenden und drehenden Werkzeugs ausgebildet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel einer Freilaufkupplung;
- Fig. 2: ein zweites bevorzugtes Ausführungsbeispiel einer Freilaufkupplung;
- Fig. 3: ein drittes bevorzugtes Ausführungsbeispiel einer Freilaufkupplung; und
- Fig. 4: ein viertes bevorzugtes Ausführungsbeispiel einer Freilaufkupplung.

### Ausführungsbeispiele:

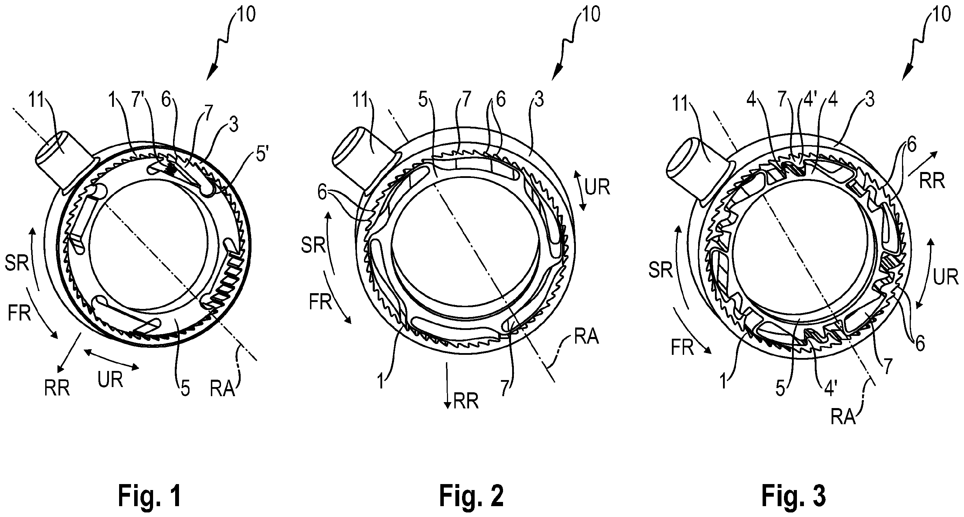

Ein erstes Ausführungsbeispiel einer erfindungsgemäßen formschlüssigen Freilaufkupplung 10 ist Fig. 1 dargestellt. Die formschlüssige Freilaufkupplung 10 ist ausgestattet mit einem eine Rastkontur 1 aufweisenden Außenring 3 und einem konzentrisch zum Außenring 3 angeordneten Innenring 5. Der Innenring 5 weist eine Klinke 7 auf, die zum Eingriff in die Rastkontur 1 vorgesehen ist. Die Klinke 7 ist in radialer Richtung RR beweglich mit dem Innenring 5 verbunden. Die Klinke 7 ist als diskretes Teil ausgebildet, d.h. insbesondere nicht einstückig mit dem Innenring 5 ausgebildet.

Die diskret ausgebildete Klinke 7 ist in eine im Innenring 5 vorgesehene Klinkennut 5' eigebracht (beispielsweise durch Einschieben parallel zur Rotationsachse RA) und somit mit dem Innenring 5 beweglich verbunden. Die Klinke 7 ist als Drucksperrklinke ausgebildet. Eine Druckfeder 7' spannt die Klinke 7 in radialer RR in Richtung der Rastkontur 1 vor.

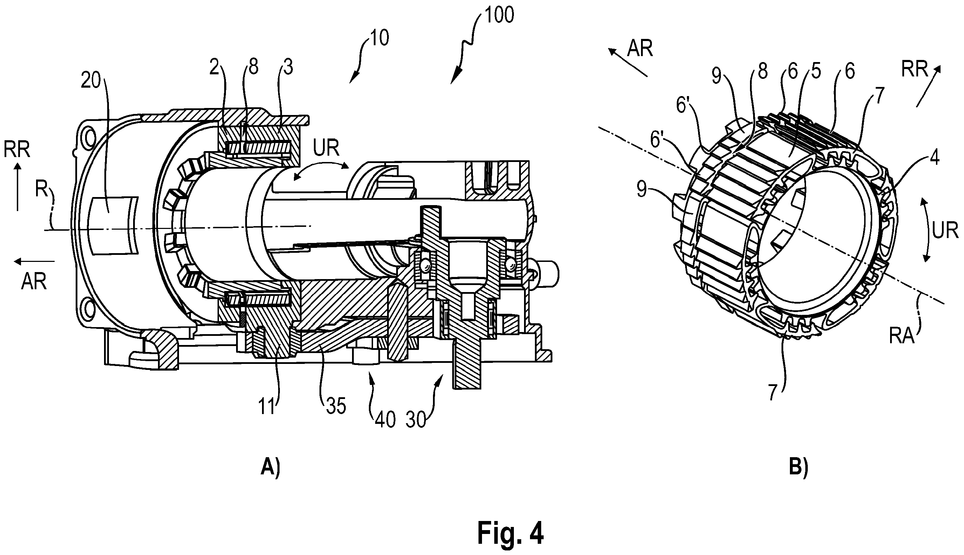

Der Außenring 3 weist eine Schwenkhülse 11 auf über die der Außenring 3 beispielsweise an ein Schlagwerk 30 und/oder einen Drehantrieb 40 eines Bohrhammers 100 (vgl. Fig. 4) angekoppelt werden kann.

Wird die Freilaufkupplung 10 am Außenring 3, beispielsweise mittels der Schwenkhülse 11, in Sperrrichtung SR betätigt, so ist eine Drehmomentübertragung auf den Innenring 5 möglich ist. Dabei wird die eine Spitze 6 der Klinke 7 im Sinne einer Drucksperrklinke gegen die Rastkontur 1 gedrückt. Wird die Freilaufkupplung 10 am Außenring 3, beispielsweise mittels der Schwenkhülse 11, in Freilaufrichtung FR betätigt, so kann der Außenring 3 durchdrehen. Es wird, abgesehen von einem vernachlässigbaren Ablösemoment der Klinke 7, kein Drehmoment auf den Innenring 5 übertragen.

Wie der Fig. 1 entnommen werden kann sind in Umfangsrichtung UR vier Klinkennut 5' vorgesehen, so dass im Innenring 5 insgesamt vier Klinken 7 aufgenommen werden können, die dann eines äußeren Umfangs des Innenrings 5 angeordnet sind. Im Ausführungsbeispiel der Fig. 1 sind der Außenring 3 und die Klinken 7 beispielhaft aus Metall hergestellt. Der Innenring 5 ist als vergleichsweise kostengünstiges Spritzgussteil und besteht aus Kunststoff.

Ein zweites Ausführungsbeispiel einer erfindungsgemäßen formschlüssigen Freilaufkupplung 10 ist Fig. 2 dargestellt. Die formschlüssige Freilaufkupplung 10 ist ausgestattet mit einem eine Rastkontur 1 aufweisenden Außenring 3 und einem konzentrisch zum Außenring 3 angeordneten Innenring 5. Der Innenring 5 weist eine Klinke 7 auf, die zum Eingriff in die Rastkontur 1 vorgesehen ist. Die Klinke 7 ist in radialer Richtung RR beweglich mit dem Innenring 5 verbunden.

Wie der Fig. 2 entnommen werden kann, ist die Klinke 7 einstückig mit dem Innenring 5 ausgebildet. Genauer gesagt weist der Innenring 5 sechs Klinken 7 auf, die entlang eines äußeren Umfangs UR des Innenrings 5 angeordnet sind. Alle Klinken 7 sind einstückig mit dem Innenring 5 ausgebildet. Jede der Klinken 7 weist mehrere Eingriffsflanken 6 auf, was eine höhere Drehmomentübertragung auf den hier beispielhaft als Kunststoff-Spritzgussteil bereitgestellten Innenring 5 ermöglicht. Der Außenring 3 nebst Schwenkhülse 11 ist beispielhaft aus Metall gefertigt. Das Freilaufgetriebe 10 der Fig. 2 besteht beispielhaft aus genau zwei Teilen, nämlich aus dem einstückigen Innenring 5 und dem einstückigen Außenring 3.

Ein drittes Ausführungsbeispiel einer erfindungsgemäßen formschlüssigen Freilaufkupplung 10 ist Fig. 3 dargestellt. Die formschlüssige Freilaufkupplung 10 ist ausgestattet mit einem eine Rastkontur 1 aufweisenden Außenring 3 und einem konzentrisch zum Außenring 3 angeordneten Innenring 5. Der Innenring 5 weist eine Klinke 7 auf, die zum Eingriff in die Rastkontur 1 vorgesehen ist. Die Klinke 7 ist in radialer Richtung RR beweglich mit dem Innenring 5 verbunden.

Wie der Fig. 3 entnommen werden kann, ist die Klinke 7 einstückig mit dem Innenring 5 ausgebildet. Genauer gesagt weist der Innenring 5 sechs Klinken 7 auf, die entlang eines äußeren Umfangs UR des Innenrings 5 angeordnet sind. Alle Klinken 7 sind einstückig mit dem Innenring 5 ausgebildet. Jede der Klinken 7 weist mehrere Eingriffsflanken 6 auf, was eine höhere Drehmomentübertragung auf den hier beispielhaft als Kunststoff-Spritzgussteil bereitgestellten Innenring 5 ermöglicht. Der Außenring 3 nebst Schwenkhülse 11 ist beispielhaft aus Metall gefertigt.

Zur Erhöhung eines in Sperrrichtung SR übertragbaren Drehmoments weist der Innenring 5 ein Verstärkungsprofil 4 auf. Das Verstärkungsprofil 4 ist, wenn die Freilaufkupplung 10 in Sperrrichtung SR betätigt wird, gegen ein an der Klinke 7 ausgebildetes Gegenprofil 4' abgestützt ist. Sowohl das Verstärkungsprofil 4 als auch das Gegenprofil 4' sind auf einer der Rastkontur 1 abgewandten Seite der Klinke 7 angeordnet. Im vorliegend dargestellten Ausführungsbeispiel sind pro Klinke 7 zwei Gegenprofil 4' an der Klinke 7 selbst, sowie zwei einstückig mit dem Innenring 5 ausgebildete Verstärkungsprofile 4 vorgesehen. Das Freilaufgetriebe 10 der Fig. 3 besteht beispielhaft aus genau zwei Teilen, nämlich aus dem einstückigen Innenring 5 und dem einstückigen Außenring 3.

Ein viertes Ausführungsbeispiel einer erfindungsgemäßen formschlüssigen Freilaufkupplung 10 ist Fig. 4 dargestellt. Dabei zeigt Fig. 4A beispielhaft die Freilaufkupplung 10 eingebaut in einem hier nur teilweise dargestellten Bohrhammer 100. Fig. 4B zeigt den freigestellten Innenring 5. Wie beim Ausführungsbeispiel der Fig. 3 weist der Innenring 5 der Fig. 4B sechs Klinken 7 auf, die entlang eines äußeren Umfangs UR des Innenrings 5 angeordnet sind. Alle Klinken 7 sind einstückig mit dem Innenring 5 ausgebildet. Jede der Klinken 7 weist mehrere Eingriffsflanken 6 auf, was eine höhere Drehmomentübertragung auf den hier beispielhaft als Kunststoff-Spritzgussteil bereitgestellten Innenring 5 ermöglicht.

Zusätzlich zu der in Fig. 3 gezeigten Freilaufkupplung 10, weist der Innenring 5 der Freilaufkupplung der Fig. 4A wenigstens eine Nebenklinke 9 auf (im dargestellten Ausführungsbeispiel sind es sechs Nebenklinken 9), die, bezogen auf eine Rotationsachse RA der Freilaufkupplung 10, in axialer Richtung AR zu der Klinke 7 versetzt am Innenring 5 angeordnet. Die Nebenklinken 9 sind ebenfalls einstückig mit Innenring 7 ausgebildet. Die Klinke 7 und die Nebenklinke 9 fluchten in axialer Richtung AR. Das Freilaufgetriebe 10 der Fig. 4 besteht beispielhaft aus genau drei Teilen, nämlich aus dem einstückigen Innenring 5, dem einstückigen Außenring 3 und dem einstückigen Nebenaußenring 2.

Wie der Fig. 4A entnommen werden kann sind die Klinken 7 und die Nebenklinken 9 durch einen den Innenring 3 in Umfangsrichtung UR umlaufenden Axialspalt 8 voneinander beabstandet. Sowohl die Klinken 7 als auch die Nebenklinken 9 sind jeweils als Drucksperrklinken ausgebildet ist. Sowohl die Klinken 7 als auch die Nebenklinken 9 weist mehrere Eingriffsflanken 6, 6' auf, was eine höhere Drehmomentübertragung auf den hier beispielhaft als Kunststoff-Spritzgussteil bereitgestellten Innenring 5 ermöglicht.

Dabei zeigt Fig. 4A zeigt wie bereits erwähnt die Freilaufkupplung 10 eingebaut in einem teilweise dargestellten Bohrhammer 100. Der Bohrhammer 100 ist ausgestattet mit einer Werkzeugaufnahme 20, einem Schlagwerk 30 und einem Drehantrieb 40, die hier nicht genauer erläutert werden müssen. Die Freilaufkupplung 10 in Fig. 4A weist einen konzentrisch zum Innenring 5 angeordneten Nebenaußenring 2 auf. Der Nebenaußenring 2 ist als vom Außenring 3 verschiedenes Teil ausgebildet, so dass mittels des Nebenaußenring 2 eine vom Außenring 3 unabhängige Freilauffunktion realisiert wird. Der Außenring 3 und der Nebenaußenring 2 sind auf ein und demselben Innenring 5 angeordnet.

Der Außenring 3 weist eine Schwenkhülse 11 auf mit dem der Außenring 3 über einen Pleuel 35 an ein Schlagwerk 30 des Bohrhammers 100 zwecks Bewegungsübertragung gekoppelt ist.

### Bezugszeichenliste

- 1: Rastkontur
- 2: Nebenaußenring
- 3: Außenring
- 4: Verstärkungsprofil
- 4': Gegenprofil
- 5: Innenring
- 5': Klinkennut
- 6, 6': Eingriffsflanke
- 7: Klinke
- 7': Druckfeder
- 8: Axialspalt
- 9: Nebenklinke
- 10: Freilaufkupplung
- 11: Schwenkhülse

- 20: Werkzeugaufnahme
- 30: Schlagwerk
- 35: Pleuel
- 40: Drehantrieb
- 100: Bohrhammer

- AR: axiale Richtung
- FR: Freilaufrichtung
- RA: Rotationsachse
- RR: radiale Richtung
- SR: Sperrrichtung
- UR: Umfangsrichtung

## Patentansprüche

1. Formschlüssige Freilaufkupplung (10) mit einem eine Rastkontur (1) aufweisenden Außenring (3) und einem konzentrisch zum Außenring (3) angeordneten Innenring (5), wobei der Innenring (5) eine Klinke (7) aufweist, die zum Eingriff in die Rastkontur (1) vorgesehen ist,
**dadurch gekennzeichnet, dass** die Klinke (7) beweglich mit dem Innenring (5) verbunden und vorzugsweise einstückig mit dem Innenring (5) ausgebildet ist.

2. Freilaufkupplung (10) nach Anspruch 1,
**dadurch gekennzeichnet, dass** der Innenring (5) eine Nebenklinke (9) aufweist, die, bezogen auf eine Rotationsachse (RA) der Freilaufkupplung (10), in axialer Richtung (AR) zu der Klinke (7) versetzt am Innenring (5) angeordnet und vorzugsweise einstückig mit Innenring (7) ausgebildet ist.

3. Freilaufkupplung (10) nach Anspruch 2,
**dadurch gekennzeichnet, dass** die Klinke (7) und die Nebenklinke (9) durch einen umlaufenden Axialspalt (8) voneinander beabstandet sind.

4. Freilaufkupplung (10) nach Anspruch 2 oder 3,
**dadurch gekennzeichnet, dass** die Klinke (7) und die Nebenklinke (9) jeweils als Drucksperrklinke ausgebildet ist.

5. Freilaufkupplung (10) nach einem der Ansprüche 2 bis 4,
**dadurch gekennzeichnet, dass** die Klinke (7) und die Nebenklinke (9) in axialer Richtung (AR) fluchten.

6. Freilaufkupplung (10) nach einem der vorangehenden Ansprüche,
**dadurch gekennzeichnet, dass** der Innenring (5) eine Mehrzahl von Klinken (7) aufweist, die entlang eines äußeren Umfangs (UR) des Innenrings (5) angeordnet sind.

7. Freilaufkupplung (10) nach einem der vorangehenden Ansprüche,
**dadurch gekennzeichnet, dass** der Außenring (3) und/oder der Innenring (5) als Spritzgussteil bereitgestellt ist und insbesondere aus Kunststoff besteht oder metallfrei ausgebildet ist.

8. Freilaufkupplung (10) nach einem der vorangehenden Ansprüche,
**dadurch gekennzeichnet, dass** der Innenring (5) ein Verstärkungsprofil (4) zur Erhöhung eines übertragbaren Drehmoments aufweist, wobei das Verstärkungsprofil (4), wenn die Freilaufkupplung (10) am Außenring (3) in Sperrrichtung (SR) betätigt wird, gegen ein an der Klinke ausgebildetes Gegenprofil (4') abgestützt ist.

9. Freilaufkupplung (10) nach Anspruch 8,
**dadurch gekennzeichnet, dass** das Verstärkungsprofil (4) und/oder das Gegenprofil (4') auf einer der Rastkontur (1) abgewandten Seite der Klinke (7) angeordnet ist.

10. Freilaufkupplung (10) nach einem der vorangehenden Ansprüche,
**dadurch gekennzeichnet, dass** die Freilaufkupplung (10) einen konzentrisch zum Innenring (5) angeordneten Nebenaußenring (2) aufweist, wobei der Nebenaußenring (2) als vom Außenring (3) verschiedenes Teil ausgebildet, so dass mittels des Nebenaußenring (2) eine vom Außenring (3) unabhängige Freilauffunktion realisiert wird.

11. Freilaufkupplung (10) nach einem der Ansprüche 2 bis 11,
**dadurch gekennzeichnet, dass** die Klinke (7) und/oder die Nebenklinke (9) mehrere Eingriffsflanken aufweist.

12. Freilaufkupplung (10) nach einem der vorangehenden Ansprüche,
**dadurch gekennzeichnet, dass** der Außenring (3) eine Schwenkhülse (11) zum Koppeln des Außenrings (3) an ein Schlagwerk (30) und/oder einen Drehantrieb (40) eines Bohrhammers (100) aufweist.

13. Bohrhammer (100) mit einer Werkzeugaufnahme (20), einem Schlagwerk (30) und einem Drehantrieb (40), wobei der Bohrhammer (100) eine Freilaufkupplung (10) nach einem der vorangehenden Ansprüche aufweist, über die die Werkzeugaufnahme (20) mit dem Schlagwerk (30) und/oder dem Drehantrieb (40) zwecks Bewegungsübertragung gekoppelt ist.
